# EUROPEAN PATENT SPECIFICATION

(11) **EP 1 928 257 B1**
(45) Date of publication and mention of the grant of the patent: **17.03.2010**
(21) Application number: 05802255.9
(22) Date of filing: 27.09.2005
(51) Int. Cl.: A23G 1/30

(54) **PROCESS FOR OBTAINING A SOFT WHITE MILK-BASED COATING AND COATING SO OBTAINED**
VERFAHREN ZUR HERSTELLUNG EINER WEICHEN WEIßEN BESCHICHTUNG AUF MILCHGRUNDLAGE, UND SO HERGESTELLTE BESCHICHTUNG
PROCÉDÉ PERMETTANT D OBTENIR UN ENROBAGE BLANC ET MOU À BASE DE LAIT ET ENROBAGE AINSI OBTENU

(43) Date of publication of application: 11.06.2008
(73) Proprietor: Leaf Italia S.R.L., 26100 Cremona-CR (IT)
(72) Inventor: MARTINCICH, Angelo, I-26100 Cremona CR (IT); BERGOGNI, Roberto, I-26100 Cremona CR (IT); CHIODELLI, Luigi, Alberto, I-26100 Cremona CR (IT)
(74) Representative: Perani, Aurelio
(86) International application number: PCT/IT2005/000555
(87) International publication number: WO 2007/036957

(56) References cited:
- EP-A- 0 427 544
- EP-A- 0 486 076
- WO-A-01/15545
- WO-A-02/49452
- GB-A- 1 107 206
- US-A- 4 572 835

## Description

This invention relates to a process for the coating of food-grade confectionery products, including hard, soft or chewy sweets or sweets made using chocolate. In particular the invention relates to a milk-based coating which is soft and white.

The soft coating comprises a coating applied to some confectionery products, for example sweets, in particular externally to the "cores" or "centres" of the confectionery products, by covering or coating such cores or centres with a solution mainly comprising carbohydrates in which water is bound through the progressive addition of crystalline or powdered sugar.

Generally the carbohydrates in solution are in the form of monosaccharides, disaccharides, oligosaccharides and polysaccharides, as such or as mixtures.

EPA0486076 discloses an edible material for coating food products having the following composition 10-50% animal or vegetable fat, 35-70% milk and/or water ,5-30% animal protein, 0-25% binders and/or thickners and 0-5% salt. Such a material is malleable and elastic in structure and has a white colour.

EPA0427544 discloses a white chocolate used as coating material.

WO02/49452 describes a coating chocolate product which is milk chocolate , dark chocolate, white chocolate.

The white chocolate confectionery compound coating comprises crystal sugar 25-60%, confectionery coating fat (24-40%) milk powder (5-25%), vanillin (0.01-0.1%) and soya lecithin (0.01-0.5%).

US4572835 discloses a white chocolate mass containing 21 parts of skin milk used for coating.

WO 01/15545 discloses a process of coating comestibles comprising the steps of: a) providing cores of comestible material to be coated, b) applying a coating syrup comprising a suspension of hydrogenated isomaltulose enriched in alpha-D-glucopyranosido-1,6-sorbitol (GPS) compared to alpha-D-glucopyranosido-1,1-mannitol (GPM) and a powder of hydrogenated isomaltulose that is not enriched in GPS compared to GPM to the cores; c) evaporating water from the applied coating syrup and d) repeating steps b) and c) to build up a layer of coating on the cores.

The process for coating the centres generally comprises a step of heating the components constituing the syrup, a step of immersing the centres in the heated syrup, an intermediate drying step, normally effected using sugar dusting, followed by final steps of smoothing and polishing to protect the product and render it more attractive.

In order to obtain high equality soft coatings the type and particle size of the sugar and the centre used are governing factors, together with the type of the confectionery syrup used, the characteristics of which affect the process and determine the uniformity of the coating.

In a process for the manufacture of soft confectionery, these variables are therefore taken into consideration right from the first steps of preparation, which essentially comprise preparation of the coating syrup and pre-treatment of the centre. Once the two steps of preparation and pre-treatment had been completed, the process of coating generally takes place in containers of a hemispherical or cylindrical shape, made of copper or stainless steel, which can suitably rotate about an inclined axis, known as pans. In these, once the centres have been loaded in, the coating syrup is added in an amount such as to cover and wet their entire surface area and the procedure then comprises repetitive coating cycles alternating with steps of drying (also known as dewatering) with sugar. This cycle of operations is repeated a certain number of times, usually until the product has achieved the desired size or weight.

In order to obtain a soft coating based on milk, the number of variables, which has to be considered in the coating process, increases, because milk is subject to the problem of browning due to the occurrence of the Maillard reaction, which imparts a dark colour to the coating, under particular temperature conditions. Thus preparation of the milk-based coating syrup and the coating procedure must meet two different requirements at the same time: on the one hand they must avoid the conditions which might give rise to browning of the coating, and on the other hand they must make it possible to easily obtain a soft coating for the centres of the confectionery products, in particular on an industrial scale, where process continuity typically does not permit interruptions for changes or adjustments in the course of production.

Thus in order to manufacture a soft milk-based coating which is still white in colour the known coating process must be suitably modified.

The object of this invention is therefore to provide a soft milk-based confectionery product which will manifestly suggest the ingredient which it contains.

Another object of this invention is to provide a process which is suitably for obtaining a soft white coating on an industrial scale.

These objects are accomplished through the process specified in claim 1.

The invention therefore relates to a process for the manufacture of a confectionery product based on milk, which is soft and white and has a hard, soft or chewy centre, and therefore to the manufacture of confectionery products coated with soft white coatings, comprising the steps of:
a) preparing a coating mixture and loading the centres into a suitable container,
b) coating the centres with the coating mixture prepared in step a),
c) drying the centres so coated,
d) repeating steps b) and c) a sufficient number of times necessary to achieve the desired size for the final coating, characterised in that the coating mixture in step a) comprises milk or a milk derivative and a syrup of one or more carbohydrates selected from the group consisting of glucose, glucose-fructose and sorbitol, the said coating mixture being held within a temperature range from 50 to 64°C for a time of less than 40 minutes in the course of step a).

Further features and advantages of the invention will be apparent from the following detailed description with reference to an embodiment and the results of tests to evaluate browning and the coating obtained.
These examples and tests are provided purely by way of example and without restriction.

In accordance with the invention it has been possible to obtain soft white milk-based coatings for confectionery products on an industrial scale through the inventive selection of coating ingredients and treatment conditions prior to the step of applying the coating to the centres. In fact it has been surprisingly found out that the coating mixture according to the invention is easily deposited on the centres when maintained at a temperature within the temperature range from approximately 50 to 64°C for a period of less than 40 minutes, owing to the achievement of a suitable viscosity index without initiating the Maillard reaction.

The coating mixture in step a) is preferably held at a temperature of between 54°C and 60°C for a time of less than 30 minutes, even more preferably at 58°C.

The viscosity of the coating mixture at the end of preparation step a) will preferably be between 1 and 8 Poise, preferably between 1 and 6.

The confectionery product according to the invention will preferably be a hard, soft or chewy sweet. The centres which have to be coated according to the invention may be jelly or chocolate centres.

According to a preferred embodiment the product in step d) is allowed to dry out in a conditioned environment (15-20°C and 50-60% relative humidity, R.H.) for a period of 1-4 days, preferably 3 days, and is the subjected to a step of hot coating.

Through this further hot coating the sweets are protected by a thin layer which is resistant to the mechanical stresses of subsequent movements, in addition to ensuring better palatability through the removal of surface roughness.

The said hot coating is preferably achieved using a further coating mixture comprising sugar, water and glucose syrup in one or more application cycles, drying with air at temperatures over 25°C. Even more preferably drying is carried out at a temperature of 35°C.

The coating mixture according to the invention comprises milk or a milk derivative. When the term milk or a milk derivative is used, this means one or more compounds selected from the group consisting of skimmed milk, partly skimmed milk, whole milk, partly skimmed condensed milk, skimmed condensed milk, concentrated sweetened milk, yoghurt.

In a first embodiment of the invention the coating mixture in step a) comprises sweetened partly skimmed condensed milk, water and glucose-fructose syrup, comprising in turn glucose and fructose in the form of mono-, oligo- and polysaccharides. Preferably the fructose in the glucose-fructose syrup is present in an amount within the range between 5 and 20% by weight with respect to the weight of the glucose-fructose syrup.

In a second and preferred embodiment of the invention the coating mixture in step a) comprises partly skimmed milk and liquid sorbitol. More preferably the liquid sorbitol contains sorbitol in an amount of approximately 50% with respect to the mass of the liquid sorbitol.

In accordance with the invention the prepared centres are then coated with the coating mixture in suitable containers, for example pans.

After the centres have been coated in step b), dispersing agents are then added which make it possible to dry out the centres (step c)). These dispersing agents are edible materials, preferably in powder form.
More preferably the.dispersing agent is powdered milk.

Advantageously, in one embodiment of the invention, after drying with a first dispersing agent a step of drying with dextrose may be performed and this makes it possible to avoid agglomeration phenomena and obtain an even more uniform coating.

In accordance with the invention steps b) and c) are repeated the number of times necessary to achieve a suitable size for the final coating, as known to those skilled in the field of confectionery. Preferably, according to the invention, the last drying, step is performed using sugar syrup, i.e. comprising glucose, sugar and water. Even more preferably, in order to obtain a smooth and regular surface the last drying step is carried out with icing sugar, by which term is meant a sugar having a particle size in which at least 95% of the particles are smaller than 250 µm.

As is known to those skilled in the art of confectionery, additives, for example flavouring and/or colouring agents and/or juices of plant origin, may be added to the coating mixture or directly to the pan.
Thus in accordance with the invention these substances are preferably added to the coating syrup before coating the hard, soft or chewy centres in step a) of the process.

In a further aspect the invention also relates to a soft coating comprising a milk content of more than 20% as indicated in claim 19.

The soft milk-based coating according to the invention will advantageously have a white appearance.

The invention will now be described in greater detail with reference to a number of embodiments which are provided purely by way of indication and without restriction.

All the percentages are percentages by weight. In the process - percentages by weight in relation to the weight of the total mass, and in the final sweet percentages by weight in relation to the weight of the sweet obtained. Whenever the term "°Bx" is used this means "degrees Brix", corresponding to the sugar content from determination of the optical activity of n grams of sugar in 100 grams of solution at 20°C.

### Example 1:

### - Preparation of the centres

A sweet of the jelly type based on pectin was prepared using the conventional method of casting into starch as a soft centre for coating according to the invention.

The base syrup for the jelly was obtained by mixing 33 kg of pectin solution (held at a temperature of 95°C), 63 kg of D.E. 60 glucose syrup and 57 kg of sugar in bags in a hot (warmix) mixer. The mixture was cooked until the residual refractometer reading was 83°Bx (corresponding to a temperature of 103°C) and then acidified with a 25% solution of citric acid. Before the casting step 3.5 kg of sweetened concentrated partly skimmed milk, together with if appropriate additional substances such as flavourings, colouring agents and juices of plant origin, were added to the 100 kg of cooked syrup. The solution was then poured into the starch moulds at a temperature of 84°C corresponding to 77°Bx. Subsequently the normal drying operations were carried out (to a final dry residue of 86°Bx), demoulding and sugaring were performed, as is characteristic of the process for the production of gelatine.

### Step a) Preparation of the coating mixture

A milk-based coating mixture was prepared by mixing 6.4 kg of sweetened condensed partly skimmed milk (refractomer residue 73°Bx) with 6.4 kg of glucose-fructose syrup, 1.2 kg of water and finally 10 g of milk flavour in a stainless steel container. The said glucose-fructose syrup contained glucose in an amount of 22% and fructose in an amount of 18% with respect to the mass of glucose-fructose syrup (refractometer residue 80°Bx). The final mixture had a dry residue of 73°Bx and was held at a temperature of 58°C for a time of not more than 30 minutes by heating it in a water bath, thus ensuring that not only the characteristic white colour of the milk but also the viscosity necessary for the distribution operations in the pan were preserved.

### Steps b)-d): Coating and drying of the centres

20 kg of sugar-coated centres prepared as indicated above were placed in a copper pan. The first coating consisted of adding of 1.5 kg of the milk-based coating mixture in step a) sufficient to guarantee coating of the entire surface area of the centres. When these were uniformly wetted and sticky 0.65 kg of powdered skimmed milk were distributed in order to dry off the surface.

While the product continued to rotate in the pan 0.25 kg of dextrose were then added and this contributed to final absorption of the moisture in the syrups.

The steps of coating in a pan and subsequent dying were then carried out for a further 16 cycles, using the same ingredients as in the first coating cycle in sequence in the following amounts: 0.8 kg of the milk-based coating mixture, 1.2 kg of powdered skimmed milk, 0.25 kg of dextrose. In order to prepare the surfaces of the coated products for the polishing step the final, coating was carried out using 1.2 kg of sugar syrup (comprising D.E. 38 glucose syrup, sugar, water) and subsequently adding 3 kg of powdered sugar. The surfaces of the jellies coated in this way were smooth, regular and white in colour.

The coated sweets weighed 3.4 g, subdivided into 68% coating and 32% centre, and had a white coating with a milk content of 61% (42% of the finished sweet).

### - Further hot coating of the milk-coated jellies

In order to improve the coating properties the jellies coated in step b) and c) were lett to dry in an air-conditioned atmosphere for three days before applying the final hot coating.

The latter was applied using a coating mixture of 71°Bx comprising 70% sugar, 26% water and 4% D.E. 38 glucose syrup.

Thus 6 kg of mixture subdivided into eight coating cycles, with drying with hot air at 35°C, were distributed over the cold-coated and dried product.

### Example 2:

25 kg of jelly centres prepared as in Example 1 were subjected to the coating process according to the invention.

### Step a) Preparation of the coating mixture

A milk-based coating mixture was prepared by mixing 6.4 kg of sweetened condensed partly skimmed milk (refractometer residue 73°Bx) with 6.4 kg of glucose-fructose syrup, 1.2 kg of water and finally 10 g of milk flavour in a stainless steel container. The said glucose-fructose syrup comprised glucose in an amount of 40% and fructose in an amount of 42% (refractometer residue 71°Bx). The final mixture had a dry residue of 73°Bx and was held at a temperature of 54°C for a time not exceeding 30 minutes, heating it in a water bath, thus ensuring that both the characteristic white colour of the milk and the viscosity necessary for the distribution operations in the pan were preserved.

### Steps b)-d): Coating and drying of the centres

25 kg of sugared centres prepared as indicated above were loaded into a copper pan. The first coating consisted of adding of 1.5 kg of the milk-based coating mixture in step a), sufficient to ensure that the entire surface area of the centres was coated. When these were uniformly wetted and sticky, 0.65 kg of powdered skimmed milk was distributed in order to dry their surfaces.

While the product continued to rotate in the pan 0.25 kg of dextrose were then added and this contributed to final absorption of the moisture in the syrups.

The steps of coating in a pan and subsequent drying were then carried out for a further 16 cycles, using the same ingredients as in the first coating cycle in sequence in the following amounts: 0.8 kg of milk-based coating mixture, 1.2 kg of powdered skimmed milk and 0.25 kg of dextrose. In order to prepare, the surfaces of the coated products for the polishing step, the final coating was carried out using. 1.2 kg of sugar syrup (comprising D.E. 38 glucose syrup, sugar, water) and subsequently adding 3 kg of powdered sugar. The surface of the jellies coated in this way was smooth, regular and white in colour.

The coated sweets weighed approximately 3.6 g, subdivided into 63% coating and 37% centre, and had a white coating with a milk content of 62% (39% of the finished sweet).

### Example 3:

30 kg of jelly centres prepared as in example 1 were subjected to the coating process according to the invention.

### Step a) Preparation of the coating mixture

A milk-based coating mixture was prepared by mixing 6.4 kg of sweetened condensed partly skimmed milk (refractometer residue 73°Bx) with 6.4 kg of glucose-fructose syrup, 1.2 kg of water and finally 15 g of milk flavour in a stainless steel container. The said glucose-fructose syrup included fructose in an amount of 9% in relation to the mass of glucose-fructose syrup (refractometer residue 80°Bx). The final mixture had a dry residue of 73°Bx and was held at a temperature of 60°C for a period of 24 minutes, heating it in a water bath, thus ensuring that both the characteristic white colour of the milk and the viscosity necessary for the subsequent distribution operations in the pan were preserved.

### Steps b)-d): Coating and drying of the centres

30 kg of sugared centres prepared as indicated above were loaded into a copper pan. The first coating consisted of adding 1.5 kg of the milk-based coating mixture in step a) sufficient to ensure covering of the entire surface area of the centres. When these were uniformly wetted and sticky 0.65 kg of powdered skimmed milk were distributed in order to dry their surfaces.

While the product continued to rotate in the pan 0.25 kg of dextrose were then added and this contributed to final absorption of the moisture in the syrups.

The steps of coating in a pan and subsequent drying were then carried out for a further 16 cycles, using the same ingredients as in the first coating cycle in sequence in the following amounts: 0.8 kg of milk-based coating mixture, 1.2 kg of powdered skimmed milk, 0.25 kg of dextrose. In order to prepare the surfaces of the coated products for the polishing step the last coating was carried out using 1.2 kg of sugar syrup (comprising D.E. 38 glucose syrup, sugar, water) and subsequently adding 3 kg of powdered sugar. The surfaces of the jellies coated in this way were smooth, regular and white in colour.

The coated sweets weighed 3.9 g, subdivided into 59% coating and 41% centre, and had a white coating with a milk content of 61% (36% on the finished sweet).

### Example 4:

30 kg of jelly centres prepared as in Example 1 were subjected to the coating process according to the invention.

### Step a) Preparation of the coating mixture

A milk-based coating mixture was prepared by mixing 6.4 kg of sweetened condensed partly skimmed milk (refractometer residue 73°Bx) with 6.4 kg of liquid sorbitol, 1.2 kg of water and finally 20 g. of milk flavour in a stainless steel container. The said liquid sorbitol comprised sorbitol in an amount of 50% by mass (refractometer residue 70°Bx). The final mixture had a dry residue of 73°Bx and was held at a temperature of 53°C for a time of approximately 35 minutes, heating it in a water bath thus ensuring that both the characteristic white colour of the milk and the viscosity necessary for the distribution operations in the pan were preserved.

### Steps b) - d): Coating and drying of the centres.

30 kg of sugared centres prepared as indicated above were loaded into a copper pan. The first coating consisted of adding 1.5 kg of the milk-based coating mixture in step a) sufficient to ensure that the entire surface area of the centres was covered. When these were uniformly wetted and sticky 0.5 kg of powdered skimmed milk were distributed in order to dry their surfaces

While the product continued to rotate in the pan 0.25 kg of dextrose were added and this contributed to final absorption of the moisture in the syrups.

The steps of coating in a pan and subsequent drying were then carried out for a further 16 cycles, using the same ingredients as in the first coating cycle in sequence in the following amounts: 0.8 kg of the milk-based coating mixture, 1.1 kg of powdered skimmed milk and 0.25 kg of dextrose. In order to prepare the surface of the coated products for the polishing step the last coating was carried out using 1.2 kg of sugar syrup (comprising D.E. 38 glucose syrup, sugar, water) and subsequently adding 3 kg of powdered sugar. The surfaces of the jellies coated in this way were smooth, regular and white in colour.

The coated sweets weighed 3.9 g, subdivided into 59% coating and 41% centre, and had a white coating witch a milk content of 57% (34% of the finished sweet).

### Example 5:

30 kg of jelly centres prepared as in Example 1 were subjected to the coating process according to the invention.

### Step a) Preparation of the coating mixture

A milk-based coating mixture was prepared mixing 6.4 kg of sweetened condensed partly skimmed milk. (refractometer residue 73°Bx) with 4.3 kg of liquid sorbitol and 2.1 kg of D.E. 38 glucose syrup, 1.2 kg of water and 15 g of milk flavour in a stainless steel container. The said liquid sorbitol included sorbitol in an amount of 50% by mass (refractometer residue 70°Bx). The final mixture had a dry residue of 73°Bx and was held at a temperature of 58°C for a time of 30 minutes, heating in a water bath, thus ensuring that both the characteristic white colour of the milk and the viscosity necessary for the distribution operations in the pan were preserved.

### Steps b)-d) Coating and drying of the centres

30 kg of sugared centre prepared as indicated above were loaded into a copper pan. The first coating consisted of adding 1.5 kg of the milk-based coating mixture in step a) sufficient to ensure that the entire surface area of the centres was covered. When these were uniformly wetted and sticky 0.65 kg of powdered skimmed milk were distributed in order to dry their surfaces.

While the product continued to rotate in the pan 0.25 kg of dextrose were then added and this contributed to final absorption of the moisture in the syrups.

The steps of coating in a pan and subsequent drying were then carried out for a further 16 cycles, using the same ingredients as in the first coating cycle in sequence in the following amounts: 0.8 kg of milk-based coating mixture, 1.2 kg of powdered skimmed milk and 0.25 kg of dextrose. In order to prepare the surfaces of the coated products for the polishing step the final coating was applied using 1.2 kg of sugar syrup (comprising D.E. 38 glucose syrup, sugar, water) and subsequently adding 3 kg of powdered sugar. The surfaces of the jellies coated in this way were smooth, regular and white in colour.

The coated sweets weighed 3.9 g, subdivided into 59% coating and 41% centre, and had a white coating with a milk content of 61% (36% of the finished sweet) .

### Example 6:

30 kg of fondant chocolate centres were subjected to the gumming process which provided for the following steps: A solution of 5 kg of water and 12 kg of sugar was prepared and brought to the boil. A mixture of 4 kg of gum Arabic and 6 kg of water were then added, producing a final solid residue of 60°Bx and a temperature of 65°C. 30 kg of chocolate centres were then coated (gummed) with 1 kg of gumming solution and dried with 7.3 kg of icing sugar.

### Step a) Preparation of the coating mixture

A milk-based coating mixture was prepared by mixing 6.4 kg of sweetened condensed partly skimmed milk (refractometer residue 73°Bx) with 4.3 kg of liquid sorbitol and 2.1 kg of D.E. 38 glucose syrup, 1.2 kg of water and 15 g of milk flavour in a stainless steel container. The said liquid sorbitol comprised sorbitol in an amount of approximately 50% by mass (refractometer residue 70°Bx). The final mixture had a dry residue of 73°Bx and was held at a temperature of 58°C for a time or 30 minutes, heating in a water bath, thus ensuring that both the characteristic white colour of the milk and the viscosity necessary for the distribution operations in the pan were preserved.

### Steps b)-d): Coating and drying of the centres

30 kg of sugared centres prepared as indicated above were loaded into a copper pan. The first coating consisted of adding 1.5 kg of the milk-based coating mixture in step a), sufficient to ensure that the entire surface area of the centres was coated. When these were uniformly wetted and sticky 0.65 kg of powdered skimmed milk were distributed in order to dry their surfaces.

While the product continued to rotate in the pan 0.25 kg of dextrose were then added and this contributed to final absorption of the moisture in the syrups.

The steps of coating in a pan and subsequent drying were then carried out for a further 16 cycles, using the same ingredients as in the first coating cycle in sequence in the following amounts: 0.8 kg of milk-based, coating mixture, 1.2 kg of powdered skimmed milk and 0.25 kg of dextrose. In order to prepare the surfaces of the coated products for the polishing step the final coating was carried out using 1.2 kg of sugar syrup (comprising D.E. 38 glucose syrup, sugar, water) and subsequently adding 3 kg of powdered sugar. The surfaces of the chocolate centres coated in this way were smooth, regular and white in colour.

The coated chocolate confectionery weighed approximately 2.65 g, subdivided into 63% coating and 37% centre, and had a white coating with a milk content of 62% (39% of the finished sweet).

### Example 7: Evaluation of the final coating obtained

The milk-coated jellies obtained in Examples 1-5 and the coated chocolate centres in Example 6 were evaluated for softness, degree of whiteness and taste.
The samples were evaluated by a panel of 10 persons.

The panel were requested to evaluate the 3 parameters by assigning one of the following scores:
+++++ = excellent
++++ = good
+++ = fair
++ = adequate
+ = poor

Two tests were performed:
Test 1) The 3 parameters were evaluated at three different times: as soon as the sweets had been produced, 6 months after coating and 12 months after coating. The sweets tested were held under uncontrolled environmental conditions: temperature from 10°C to 30°C and relative humidity from 25% to 75%.
Test 2) The 3 parameters were evaluated at three different times: as soon as the sweets had been produced 6 months after coating and 12 months after coating. The sweets tested were held under thermal cycle conditions: a temperature of 30°C for 2 days alternating with ambient temperature for 2 days.

The results are shown in Tables 1 and 2 below.

**Table 1: Test under uncontrolled environmental conditions**

| **Sample** | **Time** | **Degree of whiteness** | **Softness** | **Milk taste** |
|---|---|---|---|---|
| Example 1 | Start | +++++ | +++++ | +++++ |
| Example 1 | 6 months | +++++ | +++++ | +++++ |
| Example 1 | 12 months | ++++ | ++++ | ++++ |
| Example 2 | Start | +++++ | +++++ | +++++ |
| Example 2 | 6 months | ++++ | +++++ | +++++ |
| Example 2 | 12 months | +++ | +++++ | ++++ |
| Example 3 | Start | +++++ | +++++ | +++++ |
| Example 3 | 6 months | +++++ | +++++ | +++++ |
| Example 3 | 12 months | ++++ | ++++ | ++++ |
| Example 4 | Start | +++++ | +++++ | +++++ |
| Example 4 | 6 months | +++ | ++++ | +++++ |
| Example 4 | 12 months | +++ | ++++ | ++++ |
| Example 5 | Start | +++++ | +++++ | +++++ |
| Example 5 | 6 months | +++ | ++++ | +++++ |
| Example 5 | 12 months | +++ | ++++ | ++++ |
| Example 6 | Start | +++++ | +++++ | +++++ |
| Example 6 | 6 months | +++ | ++++ | +++++ |
| Example 6 | 12 months | +++ | ++++ | ++++ |

**Table 2: Test carried out under thermal cycling**

| **Sample** | **Time** | **Degree of whiteness** | **Softness** | **Milk taste** |
|---|---|---|---|---|
| Example 1 | Start | +++++ | +++++ | +++++ |
| Example 1 | 6 months | ++++ | ++++ | +++++ |
| Example 1 | 12 months | +++ | +++ | ++++ |
| Example 2 | Start | +++++ | +++++ | +++++ |
| Example 2 | 6 months | +++ | ++++ | +++++ |
| Example 2 | 12 months | ++ | ++++ | ++++ |
| Example 3 | Start | +++++ | +++++ | +++++ |
| Example 3 | 6 months | ++++ | ++++ | +++++ |
| Example 3 | 12 months | +++ | +++ | ++++ |
| Example 4 | Start | +++++ | +++++ | +++++ |
| Example 4 | 6 months | ++ | +++ | +++++ |
| Example 4 | 12 months | ++ | +++ | ++++ |
| Example 5 | Start | +++++ | +++++ | +++++ |
| Example 5 | 6 months | ++ | +++ | +++++ |
| Example 5 | 12 months | ++ | +++ | ++++ |
| Example 6 | Start | ++++ | +++++ | +++++ |
| Example.6 | 6 months | ++ | +++ | +++++ |
| Example 6 | 12 months | ++ | +++ | ++++ |

As indicated in the tables above, the coated jellies in Example 3 and Example 1 containing fructose in the coating had excellent colour, taste and softness properties when held under uncontrolled environmental conditions and good colour and softness and excellent taste characteristics when subjected to thermal cycling, even 6 months after coating.

### Example 7:

### Evaluation of browning of the coating according to the invention

The coating mixtures in Examples 1, 2, 3, 4 and 5 and 6 were subjected to 70°C and an evaluation was made to determine how long it took for the mixtures to brown.
In all cases the mixtures became brown immediately preventing subsequent steps of coating.

**Stability test on milk-based coating syrups at a temperature of 70°C**

| Coating syrup | Start of browning |
|---|---|
| See Example 1 | 6 min 30 s |
| See Example 2 | 4 min 15 s |
| See Example 3 | 7 min 05 s |
| See Example 4 | 5 min 10 s |
| See Example 5 | 4 min 20 s |
| See Example 6 | 4 min 20 s |

### Example 8:

To demonstrate that selection of the coating ingredients is inventive the following, three coating mixtures were prepared at temperatures and over times suitable for avoiding browning of the milk.

### Mixture 1 according to the invention

50 g of mixture comprising:
sweetened partly skimmed milk, 5% fat = 45.7% glucose-fructose syrup containing 18% of fructose (D.E.70) = 45.7%
water = 8.6%
were prepared in a glass beaker.

### Mixture 2 according to the invention

Preparation and heating of the mixture as for mixture 1, but using a glucose-fructose syrup with a high fructose content, specifically comprising 42% of fructose (D.E. 95).

### Comparison mixture 3

Preparation and heating of a mixture as for mixtures 1 and 2, but using a glucose syrup comprising 50% maltose (D.E. 42).

The mixtures were separately heated in a water bath to temperatures of 56°C. After 35 minutes heating the mixtures were white and the viscosity of the solutions was evaluated. The values shown in Table 3 were obtained.

**Table 3: Evaluation of viscosity**

| Coating mixture | Viscosity of the mixture (Poise) |
|---|---|
| Mixture 1 | 4 |
| Mixture 2 | 3 |
| Mixture 3 | 12.2 |

Although all three mixtures were white in colour, after 35 minutes heating coating Mixture 3 had a viscosity which was too high to permit coating in the subsequent coating step. Conversely Mixtures 1 and 2 according to the invention reached a viscosity which was suitable for the subsequent step of coating the centres without any browning occurring.

The temperature of Mixture 3 was therefore further raised to reduce the viscosity. After 22 minutes of treatment at 70°C the mixture began to brown and the viscosity was still too high to permit uniform coating of the centres.

| Coating syrup | Browning to (°C) | Time (min) | Syrup viscosity (Poise) |
|---|---|---|---|
| Syrup 3 | 70 | 22 | 11.1 |

It is therefore obvious that the choice of ingredients according to the invention and the time periods and temperatures make it easy to prepare a soft white coating for confectionery products. Definition of the parameters indicated in the appended claims therefore makes coating possible on an industrial scale, where it is necessary to have continuity of production of the coated confectionery product without the occurrence of interruptions, which would otherwise drastically reduce the efficiency of the industrial process.

Although the invention has been described with reference to soft jelly centres and chocolate centres, the general technique may allow for changes or supplements to the procedure just described in order that it may be applied to other types of confectionery product, deriving the surprising properties according to the invention from the nature of the step of preparing the coating mixture as indicated in the appended claims.

## Claims

1. Process for obtaining a white soft milk-based coating of hard, soft or chewy centres of confectionery products comprising the steps of:
a) preparing a coating mixture and loading the centres into a suitable container,
b) coating the said centres with the coating mixture prepared in step a),
c) drying the centres coated in this way,
d) repeating steps b) and c) a number of times necessary to achieve the desired size of the final coating, **characterised in that** the coating mixture in step a) comprises milk or a milk derivative and a syrup with one or more carbohydrates selected from the group consisting of glucose, glucose-fructose and sorbitol, the said coating mixture being held within a temperature range from 50 to 64°C for a period of time of less than 40 minutes in step a).

2. Process according to claim 1, wherein the viscosity of the coating mixture at the end of preparation step
a) lies between 1 and 8 Poise, preferably between 1 and 6 Poise.

3. Coating process according to claim 1 or 2, wherein the confectionery product is a hard, soft or chewy sweet.

4. Process according to any one of claims 1-3, wherein the product in step d) is left to dry in an air-conditioned environment for a period of 1-4 days and then subjected to a hot coating step.

5. Process according to claim 4, wherein the drying time corresponds to 3 days.

6. Process according to claim 4 or 5, wherein the said hot coating is carried out using a further coating mixture comprising sugar, water and glucose syrup in one or more application cycles, with drying being carried out at temperatures over 25°C.

7. Process according to claim 6, wherein drying is carried out at a temperature of 35°C.

8. Process according to any one of claims 1, to 7, wherein the coating mixture in step a) comprises one or more compounds selected from the group consisting of skimmed milk, partly skimmed milk, whole milk, sweetened condensed partly skimmed milk, condensed skimmed milk, yoghurt or their mixtures,

9. Process according to any one of claims 1 - 8, wherein the coating mixture in step a) comprises condensed partly skimmed milk, water and sorbitol.

10. Process according to any one of claims from 1 to 8, wherein the coating mixture in step a) comprises condensed partly skimmed milk, water and glucose-fructose syrup.

11. Process according to claim 10, wherein the glucose-fructose syrup comprises fructose in an amount from 5 to 20% by weight with respect to the weight of the glucose-fructose syrup.

12. Process according to any one of the preceding claims, wherein the coating mixture is maintained at a temperature of between approximately 54°C and approximately 60°C, preferably at a temperature of approximately 58°C, for a time of less than 30 minutes.

13. Process according to any one of claims from 1 to 12, wherein drying step c) is carried out using edible powdered dispersing agents.

14. Process according to claim 13, wherein the dispersing agent is powdered milk.

15. Process according to any of claims 1 to 14, wherein following drying with a first dispersing agent a step of drying with dextrose is carried out.

16. Process according to any one of claims 1 to 15, wherein the last drying step is carried out with a mixture comprising glucose, sugar and water.

17. Process according to claim 16, wherein additives are added to the coating mixture in step a).

18. Process according to claim 17, wherein the additives are selected from the group consisting of flavouring substances, colouring agents and/or juices of plant origin.

## Patentansprüche

1. Verfahren zum Erhalten eines weißen weichen milchbasierten Überzugs von harten, weichen oder kaufreudigen Füllungen von Süßwarenprodukten, umfassend die Schritte des:
a) Zubereitens einer Überzugsmischung und Einfüllens der Füllungen in einen geeigneten Behälter,
b) Überziehens der Füllungen mit der in Schritt a) zubereiteten Überzugsmischung,
c) Trocknens der auf diese Weise überzogenen Füllungen,
d) Wiederholens der Schritte b) und c) für eine Anzahl von Malen, die notwendig ist, um die gewünschte Größe des endgültigen Überzugs zu erhalten,
**dadurch gekennzeichnet,**
**daß** die Überzugsmischung von Schritt a) Milch oder ein Milchderivat und einen Sirup mit einem oder mehreren aus der aus Glukose, Glukose-Fruktose und Sorbit bestehenden Gruppe ausgewählten Kohlehydrat(en) umfaßt, wobei die Überzugsmischung in Schritt a) in einem Temperaturbereich von 50-64°C für eine Zeitdauer von weniger als 40 Minuten gehalten wird.

2. Verfahren nach Anspruch 1, wobei die Viskosität der Überzugsmischung am Ende des Zubereitungsschrittes a) zwischen 1 und 8 Poise, vorzugsweise zwischen 1 und 6 Poise liegt.

3. Überzugsverfahren gemäß Anspruch 1 oder 2, wobei das Süßwarenprodukt eine harte, weiche oder kaufreudige Süßigkeit ist.

4. Verfahren nach einem der Ansprüche 1 bis 3, wobei das Produkt in Schritt d) in einer klimatisierten Umgebung für eine Zeitdauer von 1-4 Tagen trocknen gelassen wird und dann einem Heißüberzugsschritt ausgesetzt wird.

5. Verfahren nach Anspruch 4, wobei die Trocknungszeit 3 Tagen entspricht.

6. Verfahren nach Anspruch 4 oder 5, wobei der Heißüberzugsschritt unter Verwendung einer weiteren Überzugsmischung, die Zucker, Wasser und Glukosesirup enthält, in einem oder mehreren Anwendungszyklen ausgeführt wird, wobei das Trocknen bei einer Temperatur oberhalb von 25°C ausgeführt wird.

7. Verfahren nach Anspruch 6, wobei das Trocknen bei einer Temperatur von 35°C ausgeführt wird.

8. Verfahren nach einem der Ansprüche 1 bis 7, wobei die Überzugsmischung aus Schritt a) eine oder mehrere Komponente(n) umfaßt, die aus der aus entrahmter Milch, teilweise entrahmter Milch, Vollmilch, gesüßter teilentrahmter Kondensmilch, entrahmter Kondensmilch, Joghurt oder Mischungen daraus bestehenden Gruppe ausgewählt ist bzw. sind.

9. Verfahren nach einem der Ansprüche 1 bis 8, wobei die Überzugsmischung aus Schritt a) teilentrahmte Kondensmilch, Wasser und Sorbitol umfaßt.

10. Verfahren nach einem der Ansprüche 1 bis 8, wobei die Überzugsmischung aus Schritt a) teilentrahmte Kondensmilch, Wasser und Glukose-Fruktose-Sirup umfaßt.

11. Verfahren nach Anspruch 10, wobei der Glukose-Fruktose-Sirup Fruktose in einer Menge von 5-20 Gew.-% bezogen auf das Gewicht des Glukose-Fruktose-Sirups enthält.

12. Verfahren nach einem der vorangehenden Ansprüche, wobei die Überzugsmischung auf einer Temperatur zwischen ungefähr 54°C und ungefähr 60°C, vorzugsweise auf einer Temperatur von ungefähr 58°C für eine Zeit kürzer als 30 Minuten gehalten wird.

13. Verfahren nach einem der Ansprüche 1 bis 12, wobei der Trocknungsschritt c) unter Verwendung eßbarer gepulverter Dispergiermittel ausgeführt wird.

14. Verfahren nach Anspruch 13, wobei das Dispergiermittel Milchpulver ist.

15. Verfahren nach einem der Ansprüche 1 bis 14, wobei auf den Schritt des Trocknens mit einem ersten Dispergiermittel folgend ein Schritt des Trocknens mit Dextrose ausgeführt wird.

16. Verfahren nach einem der Ansprüche 1 bis 15, wobei der letzte Trocknungsschritt mit einer Glukose, Zucker und Wasser enthaltenden Mischung ausgeführt wird.

17. Verfahren nach Anspruch 16, wobei Additive der Überzugsmischung in Schritt a) zugegeben werden.

18. Verfahren nach Anspruch 17, wobei die Additive aus der aus Aromastoffen, Farbstoffen und/oder Fruchtsäften pflanzlichen Ursprungs bestehenden Gruppe ausgewählt sind.

## Revendications

1. Procédé d'obtention d'un enrobage doux blanc à base de lait d'intérieurs durs, tendres ou difficiles à mâcher de produits de confiserie, comprenant les étapes consistant à :
a) préparer un mélange d'enrobage et à introduire les intérieurs dans un contenant approprié,
b) enrober lesdits intérieurs du mélange d'enrobage préparé à l'étape a),
c) sécher les intérieurs ainsi enrobés,
d) répéter les étapes b) et c) pour un nombre de fois nécessaire à l'obtention de la dimension souhaitée de l'enrobage final,
**caractérisé par le fait**
**que** ledit mélange d'enrobage de l'étape a) comprend du lait ou un dérivé de lait et un sirop avec un ou plusieurs glucide(s) choisi(s) dans le groupe constitué par le glucose, le glucose-fructose et le sorbitol, le mélange d'enrobage étant maintenu, à l'étape a), à l'intérieur d'une plage de température allant de 50 à 64°C pour une durée inférieure à 40 minutes.

2. Procédé selon la revendication 1, dans lequel la viscosité du mélange d'enrobage à la fin de l'étape de préparation a) est comprise entre 1 et 8 poise(s), de préférence entre 1 et 6 poise(s).

3. Procédé d'enrobage selon la revendication 1 ou 2, dans lequel ledit produit de confiserie est une friandise dure, tendre ou difficile à mâcher.

4. Procédé selon l'une quelconque des revendications 1 à 3, dans lequel on fait sécher le produit à l'étape d) dans un environnement conditionné, pour une durée comprise entre 1 à 4 jours et on le soumet ensuite à une étape d'enrobage à chaud.

5. Procédé selon la revendication 4, dans lequel le temps de séchage correspond à 3 jours.

6. Procédé selon la revendication 4 ou 5, dans lequel ladite étape d'enrobage à chaud est mise en oeuvre en utilisant un autre mélange d'enrobage contenant du sucre, de l'eau et du sirop de glucose, dans un ou plusieurs cycle(s) d'application, le séchage étant réalisé à une température supérieure à 25°C.

7. Procédé selon la revendication 6, dans lequel le séchage est réalisé à une température de 35°C.

8. Procédé selon l'une quelconque des revendications 1 à 7, dans lequel le mélange d'enrobage de l'étape a) comprend un ou plusieurs composant(s) choisi(s) dans le groupe comprenant le lait écrémé, le lait demi-écrémé, le lait entier, le lait condensé sucré demi-écrémé, le lait condensé écrémé, le yaourt ou des mélanges de ceux-ci.

9. Procédé selon l'une quelconque des revendications 1 à 8, dans lequel le mélange d'enrobage de l'étape a) comprend du lait condensé demi-écrémé, de l'eau et du sorbitol.

10. Procédé selon l'une quelconque des revendications 1 à 8, dans lequel le mélange d'enrobage de l'étape a) comprend du lait condensé demi-écrémé, de l'eau et du sirop de glucose-fructose.

11. Procédé selon la revendication 10, dans lequel le sirop de glucose-fructose contient une quantité de fructose comprise entre 5 et 20 % en poids par rapport au poids du sirop de glucose-fructose.

12. Procédé selon l'une quelconque des revendications précédentes, dans lequel le mélange d'enrobage est maintenu à une température comprise entre 54°C à peu près et 60°C à peu près, de préférence à une température d'environ 58°C pour une durée inférieure à 30 minutes.

13. Procédé selon l'une quelconque des revendications 1 à 12, dans lequel ladite étape de séchage c) est réalisée en utilisant des agents dispersants comestibles en poudre.

14. Procédé selon la revendication 13, dans lequel ledit agent dispersant est du lait en poudre.

15. Procédé selon l'une quelconque des revendications 1 à 14, dans lequel, à la suite de l'étape de séchage à l'aide d'un premier agent dispersant, on met en oeuvre une étape de séchage à l'aide de dextrose.

16. Procédé selon l'une quelconque des revendications 1 à 15, dans lequel la dernière étape de séchage est mise en oeuvre avec un mélange contenant du glucose, du sucre et de l'eau.

17. Procédé selon la revendication 16, dans lequel des additifs sont ajoutés au mélange d'enrobage à l'étape a).

18. Procédé selon la revendication 17, dans lequel les additifs sont choisis dans le groupe comprenant les substances aromatisantes, les substances colorantes et/ou les jus de fruits d'origine végétale.
